# EUROPEAN PATENT APPLICATION

(11) **EP 4 528 150 A1**
(43) Date of publication of application: **26.03.2025**
(21) Application number: 23199301.5
(22) Date of filing: 25.09.2023
(51) Int. Cl.: F21S 43/27, B29C 65/16, B29C 65/00, F21S 43/37, F21S 43/50

(54) **AUTOMOTIVE LIGHTING DEVICE AND RELATIVE PRODUCTION METHOD**

(71) Applicant: Marelli Automotive Lighting Italy S.p.A. Con Socio Unico, 10078 Venaria Reale (TO) (IT)
(72) Inventor: BUZZURRO, Alessandro, 33028 TOLMEZZO (UD) (IT); FERIGO, Domenico, 33028 TOLMEZZO (UD) (IT)
(74) Representative: Studio Torta S.p.A.

(57) **Abstract**

An automotive lighting device (1) comprising: a concave-shaped rear casing (2), which is made of opaque polymeric material and is adapted to be fixed to the body of the vehicle; a front half-shell (3), which is arranged to close the mouth of said rear casing (2) and is provided with at least one transparent or semi-transparent sector; and at least one lighting assembly (4, 5, 6), which is located inside the rear casing (2) and is adapted to backlight a corresponding transparent or semi-transparent sector of the front half-shell (3); the automotive lighting device (1) being provided with at least one internal component (7, 16, 28) that is made of opaque polymeric material and rests on the inner surface of the rear casing (2) in at least one contact area (9, 19, 29); said rear casing (2) and said internal component (7, 16, 28) being rigidly fixed to each other by a laser welding joint (10, 20, 30) realized at said contact area.

## Description

### TECHNICAL FIELD

The present invention concerns an automotive lighting device and relative production method.

More specifically, the present invention preferably concerns a production method of a headlight or a taillight for cars and similar vehicles, i.e. a lighting apparatus adapted to be incorporated in a motor vehicle with the function of signalling the position, sudden deceleration and/or turning direction of the vehicle, and/or with the function of lighting the area surrounding the vehicle. Use to which the following description will explicitly refer without thereby loss of generality.

### STATE OF THE ART

As is known, a headlight or a taillight for cars and similar motor vehicles is conventionally a lighting device that has to be located in the front, rear or lateral part of the vehicle, and performs the function of lighting the area surrounding the vehicle and/or the function of signalling the position of the vehicle, sudden deceleration of the vehicle and/or turning direction of the vehicle, in compliance with given photometric type-approval standards.

The majority of taillights for cars and similar motor vehicles usually comprise: a substantially basin-shaped and rigid, rear casing which is made of opaque plastic material and is structured so as to be stably recessed into a specifically provided compartment in the rear part of the vehicle body; a rigid and substantially lenticular-shaped, front half-shell which is made of plastic material, is usually provided with a number of transparent or semi-transparent sectors, optionally also having a different colour from one another, and is arranged to close the mouth of the rear casing, usually so as to surface outside the vehicle body; and a series of electrically-powered lighting assemblies that are located inside the rear casing, each immediately beneath a corresponding transparent or semi-transparent sector of the front half-shell, so as to selectively backlight the overlying transparent or semi-transparent sector of the front half-shell.

In further detail, the front half-shell has a shape substantially complementary to that of the mouth of the rear casing, and is firmly fixed to the rear casing via welding along the perimeter rim of said mouth.

Generally each transparent or semi-transparent sector of the front half-shell is moreover uniquely associated with a specific light signal, hence the various lighting assemblies inside the hollow housing formed/delimited by the front half-shell and by the rear casing are structured so as to emit, on command, a light beam which, once exiting from the fighting device through the corresponding transparent or semi-transparent sector of the half-shell, meets the photometric type-approval standards (light colour and distribution) established for said light signal.

Currently the majority of lighting assemblies placed inside the hollow housing delimited by the front half-shell and the rear casing use a series of LEDs (acronym of Light Emitting Diode) as light sources, and usually also include one or more reflector bodies that reflect the light produced by the LEDs towards the facing transparent or semi-transparent sector of the front half-shell, and/or one or more light-guide bodies that collect the light produced by the LEDs and channel it by total internal reflection towards the facing transparent or semi-transparent sector of the front half-shell.

In addition, these lighting assemblies usually also comprise filters, corrective optics, shielding masks and/or other active and/or passive optical devices, which are capable of adapting the light beam emitted by the various LEDs to the photometric and aesthetic requirements associated with automotive use.

Lastly, these lighting assemblies are also provided with bezels, brackets and/or other support elements which are made of plastic material and which rest on the inner surface of the rear casing, and are adapted to support the printed circuit board(s) housing the LEDs, the electric wiring, the reflector body/ bodies, the light-guide body/bodies and/or the other active and/or passive optical devices that contribute to forming each lighting assembly.

Currently the majority of the components and macro-components that form the various lighting assemblies are firmly fixed to the rear casing via self-threading metal screws, the majority of which are inserted in a pass-through manner in the rear casing from the outside towards the inside of the lighting device, so as to arrange the head of the screw in abutment on the outer surface of the casing.

In addition, the inside of the rear casing is always provided with reference shoulders, centring pins and/or snap locking tabs, which are adapted to retain in place the various components or macro-components inside the rear casing until insertion of the self-threading screws.

The assembly of the taillight currently requires to place the various components or macro-components that form the lighting assembly/assemblies inside the rear casing according to a given sequence, where necessary locking them temporarily in place with the aid of the reference shoulders, the centring pins and/or the snap locking tabs; and then to screw the self-threading screws in the rear casing so as to rigidly lock the various components or macro-components to the casing. The assembly of the taillight is then completed by welding the front half-shell onto the rim of the mouth of the rear casing.

Clearly the assembly line of the taillight is provided with one or more inserting stations in which the various components or macro-components are placed inside the rear casing in a given sequence; one or more fixing stations in which the self-threading screws are screwed in the rear casing so as to lock the components or macro-components stably in place inside the rear casing; and a welding station in which the front half-shell is welded to the rear casing.

Unfortunately, although essential for manufacturing the taillight, the self-threading screws make assembly of the taillight relatively laborious and also significantly affect the overall weight and cost of the lighting device.

Being made of metal, in fact, the self-threading screws are some of the most costly components of the lighting device. In addition, during insertion in the rear casing, the self-threading screws very often split or jam inside the automatic screwdriver, with all consequent problems.

In the past, some automotive lighting device manufacturers attempted to eliminate the self-threading metal screws by introducing a greater number of centring pins and snap locking tabs, but the first experimental tests showed that this type of fixing system is not able to withstand the mechanical stress (vibrations) typical of automotive use.

In addition, the manufacture of a large number of centring pins and/or snap locking tabs increases the production costs of the lighting device, because the manufacture of each pin or tab requires, inside the mould, a series of movable parts that make extremely costly and complicated the structure of the mould used to produce the rear casing.

### OBJECT OF THE INVENTION

Aim of the present invention is to eliminate or in any case minimize the use of metal screws, so as to simplify and speed up the assembly of automotive lighting devices, also reducing the production costs thereof.

In accordance with these aims, according to the present invention there is provided an automotive lighting device as defined in Claim 1 and preferably, though not necessarily, in any one of the dependent claims.

In addition, according to the present invention there is provided a production method for an automotive lighting device as defined in Claim 11 and preferably, though not necessarily, in any one of the dependent claims.

### BRIEF DESCRIPTION OF THE FIGURES

The present invention will now be described with reference to the attached drawings, which illustrate a non-limiting embodiment example thereof, in which:
- Figure 1 is a perspective view of an automotive lighting device realized according to the teachings of the present invention, with parts in section and parts removed for clarity's sake;
- Figure 2 is a partially exploded perspective view of the automotive lighting device illustrated in Figure 1, with parts removed for clarity's sake;
- Figure 3 is a lateral view of the automotive lighting device illustrated in Figures 1 and 2, with parts in section and parts removed for clarity's sake;
- Figure 4 is a first front view of the automotive lighting device illustrated in the preceding figures, with parts removed for clarity's sake;
- Figure 5 is a lateral view of the automotive lighting device illustrated in Figure 4, sectioned along the section line A-A and with parts removed for clarity's sake;
- Figure 6 is a second front view of the automotive lighting device illustrated in Figures 1, 2 and 3, with parts removed for clarity's sake;
- Figure 7 is a lateral view of the automotive lighting device illustrated in Figure 6, sectioned along the section line B-B and with parts removed for clarity's sake;
- Figure 8 is a third front view of the automotive lighting device illustrated in Figures 1, 2 and 3, with parts removed for clarity's sake;
- Figure 9 is a lateral view of the automotive lighting device illustrated in Figure 8, sectioned along the section line C-C with parts removed for clarity's sake;
- Figure 10 is a lateral view of a first variation of the automotive lighting device illustrated in Figures 1, 2 and 3, with parts in section and parts removed for clarity's sake;
- Figures 11, 12 and 13 schematically illustrate some assembly steps of the automotive lighting device illustrated in the preceding figures, with parts in section and parts removed for clarity's sake;
- Figure 14 is a view of the rear part of a second variation of the automotive lighting device illustrated in Figures 1, 2 and 3, with parts removed for clarity; whereas
- Figure 15 is a lateral view of the automotive lighting device illustrated in Figure 14, with parts in section and parts removed for clarity.

### DETAILED DISCLOSURE OF EMBODIMENTS

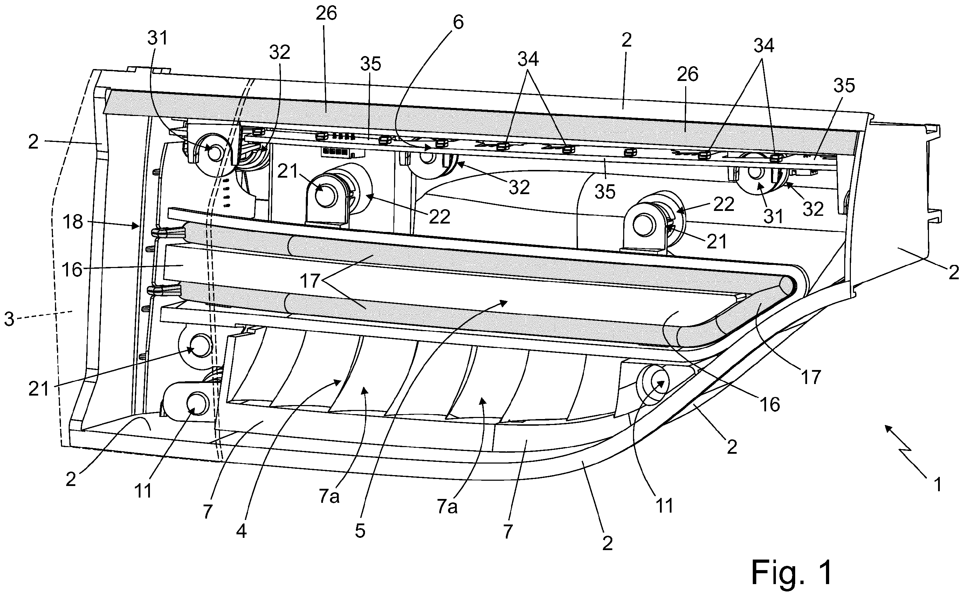

With reference to Figures 1, 2 and 3, number 1 denotes as a whole an automotive lighting device, i.e. a lighting apparatus adapted to be firmly fixed on the front or rear part of the body of a motor vehicle, with the function of emitting light signals adapted to signal/indicate the position of the vehicle and/or sudden deceleration of the vehicle and/or turning direction of the vehicle during travel and/or with the function of lighting the area surrounding the vehicle.

In other words, the automotive lighting device 1 is adapted to be fixed on the front or rear part of the vehicle body of a car, van, lorry, motorcycle or other similar motor vehicle, to perform the function of a headlight or taillight.

Clearly the automotive lighting device 1 may also be located on a side of the car or other similar motor vehicle.

Preferably the automotive lighting device 1 is moreover structured so as to be stably recessed in the vehicle body (not illustrated) and to surface outside the latter.

In the illustrated example, in particular, the automotive lighting device 1 is preferably structured to be stably recessed in the rear part of the vehicle body of a car or other similar motor vehicle.

In other words, the automotive lighting device 1 is preferably a taillight for cars and the like.

Obviously, in a different embodiment, the automotive lighting device 1 may also be structured so as to be simply fixed cantilevered on the front, lateral or rear part of the vehicle body (not illustrated).

With reference to Figures 1, 2 and 3, the automotive lighting device 1 firstly comprises: a rear casing 2 with a substantially rigid and opaque structure, which has a concave shape and is adapted to be firmly fixed on the vehicle body (not illustrated), preferably inside a seat specifically realized in the rear part of the vehicle body; and a front half-shell 3 with a substantially rigid and transparent structure, separate and distinct from the rear casing, which is roughly lenticular in shape and is firmly fixed to the rear casing 2, to close the mouth of the latter, so as to form, together with the rear casing 2, a closed and internally hollow rigid housing. Preferably the front half-shell 3 is moreover structured so as to surface outside the vehicle body.

In further detail, the rear casing 2 is preferably shaped substantially like a basin advantageously oblong and/or has a nominal thickness preferably ranging between 1 and 4 mm (millimetres).

In addition, the rear casing 2 preferably has a monolithic structure, and is made mainly of opaque polymeric material advantageously by injection moulding. In other words, the rear casing 2 is preferably made of an opaque thermoplastic polymer.

Preferably the rear casing 2 is moreover provided, on the outer surface, with a series of fixing appendages that allow the rear casing 2 to be rigidly attached to the vehicle body (not illustrated).

In the illustrated example, in particular, the rear casing 2 is preferably made of acrylonitrile-butadiene-styrene (ABS) or other polymeric material, advantageously filled with carbon black or other opacifying pigment.

Obviously, in a different embodiment, the rear casing 2 could also be shaped and/or structured so as to be at least partially recessed in a seat specifically realized in the front or lateral part of the vehicle body (not illustrated), or so as to be simply fixed cantilevered on the front, lateral or rear part of the vehicle body.

The front half-shell 3, on the other hand, is provided with one or more transparent or semi-transparent sectors (i.e. sectors that allow the passage of visible light), optionally also having different colours from one another, and is rigidly fixed to the rear casing 2 preferably in a fluid-tight manner.

Clearly the front half-shell 3 may also include one or more opaque sectors adjoining said transparent or semi-transparent sector(s) .

In further detail, the front half-shell 3 preferably has a shape substantially complementary to the mouth of the rear casing 2, and is fixed to the rear casing 2 along the perimeter rim of the same mouth.

In addition, the front half-shell 3 preferably has a monolithic structure, and is preferably made mainly of a transparent polymeric material advantageously by injection moulding. In other words, also the front half-shell 3 is preferably made of a transparent thermoplastic polymer.

Preferably the front half-shell 3 is furthermore directly welded to the rear casing 2 in a substantially seamless way throughout the perimeter rim of the mouth of rear casing 2.

In the illustrated example, in particular, the front half-shell 3 is preferably made of transparent polycarbonate (PC), transparent polymethylmethacrylate (PMMA) or other transparent or semi-transparent polymeric material.

Preferably the front half-shell 3 is moreover welded to the rear casing 2 in known manner via laser welding, vibration welding or hot-plate welding.

With reference to Figures 1, 2 and 3, in addition, automotive lighting device 1 moreover comprises a series of lighting internal components, separate and distinct from the rear casing 2 and from the front half-shell 3, some of which are substantially rigid and made of polymeric material opaque to visible light.

Furthermore, some of these lighting internal components made of opaque polymeric material are arranged resting on the inner surface of rear casing 2 in at least one contact area or zone, and are rigidly fixed in a non-removable manner to the rear casing 2 via at least one laser welding joint realized in said contact area. Preferably said laser welding joint is also substantially a spot weld.

In further detail, the rear casing 2 has, at said contact area, a small-dimensions portion made of laser-transparent polymeric material, which locally takes up the entire thickness of the rear casing 2 so as to allow the laser beam to pass through the rear casing 2 without substantial energy losses.

Alternatively, the lighting internal component made of opaque polymeric material has, at said contact area, a small-dimensions limited portion made of laser-transparent polymeric material, which locally takes up the entire thickness of the internal component so as to allow the laser beam to pass through the component without substantial energy losses.

The contact area between the rear casing 2 and the internal component made of opaque polymeric material is therefore formed/defined by a portion made of polymeric material which is opaque (to visible light) and by an adjacent portion made of laser-transparent polymeric material.

The laser welding joint is located straddling said portion made of laser-transparent polymeric material and the adjacent portion made of opaque polymeric material.

The rear casing 2 or, alternatively, the internal component is therefore a two-colour piece or a two-materials piece.

Preferably, the rear casing 2 and the lighting internal component are furthermore shaped/structured so as to provide, in the area of mutual contact, a shape coupling.

In further detail, the rear casing 2 and the lighting internal component made of opaque polymeric material are preferably shaped/structured so as to realize, in the area(s) or zone(s) of mutual contact, a male-female coupling.

In greater detail, the/each lighting internal component made of opaque polymeric material is preferably provided with one or more protruding fixing pins, each of which extends parallel to a predefined insertion direction, and is adapted to arrange its distal end in abutment against the inner surface of the rear casing 2.

The laser welding joint is preferably located at the distal end of the fixing pin, which is made of opaque polymeric material.

In addition, the/each fixing pin is preferably also adapted to engage a corresponding receiving seat, which is preferably substantially cup-shaped, and is realized directly on the rear casing 2, or rather on the bottom of the rear casing 2.

The distal end of the fixing pin, furthermore, is preferably adapted to rest stably on the bottom of the receiving seat, and therefore the contact area is preferably located on the bottom of said receiving seat.

In further detail, the receiving seat preferably has a shape substantially complementary to that of the distal end of the fixing pin.

In addition, the portion made of laser-transparent polymeric material is preferably located on the bottom of said receiving seat. Alternatively, the whole receiving seat may be made of laser-transparent material.

Clearly, in a different embodiment, the fixing pins may protrude cantilevered from the bottom of the rear casing 2 and the receiving seats may be located on the internal component or components made of opaque polymeric material.

With reference to Figures 1, 2 and 3, in particular the automotive lighting device 1 comprises one or more lighting assemblies, which is/are located inside the rear casing 2 and is/are adapted to backlight the front half-shell 3.

In further detail, each lighting assembly is preferably aligned with a corresponding transparent or semi-transparent sector of front half-shell 3, and is adapted to emit light so as to backlight said transparent or semi-transparent sector of half-shell 3, preferably separately and independently of the other lighting assemblies.

In greater detail, the lighting assembly/assemblies 3 is/are preferably electrically-powered lighting assemblies that is/ are adapted to emit light on command and are advantageously also entirely accommodated within the rear casing 2.

Preferably the/each of the lighting assemblies is furthermore structured so as to emit, on command, a light beam which, once exited from the automotive lighting device 1 through the corresponding transparent or semi-transparent sector of the half-shell 3, meets the photometric type-approval standards (light colour and distribution) established for a given light signal.

Clearly one or some lighting assemblies of automotive lighting device 1 may also emit a light beam that does not meet or must meet said photometric type-approval standards.

Optionally the automotive lighting device 1 may also comprise one or more cameras and/or one or more photosensitive sensors and/or one or more radar devices and/or one or more LiDAR (acronym of Light Detection and Ranging) instruments and/or other supplementary electronic devices, again accommodated within the rigid housing formed/delimited by rear casing 2 and by front half-shell 3.

Preferably the above-mentioned lighting internal components made of opaque polymeric material contribute to forming said lighting assembly/assemblies and/or said supplementary electronic device(s).

In other words, the or at least one of the lighting assemblies or other supplementary electronic devices preferably include one or more substantially rigid and opaque, lighting internal components which are made of opaque polymeric material, rest on the inner surface of rear casing 2 at at least one relative contact/support area or zone, and are rigidly fixed in a non-removable manner to the rear casing 2 by means of a laser welding joint realized in said contact area.

In the illustrated example, in particular, the automotive lighting device 1 is preferably provided with three lighting assemblies separate and distinct from one another, in the following denoted by numbers 4, 5 and 6, each of which is adapted to backlight a corresponding transparent or semi-transparent sector of the front half-shell 3.

With reference to Figures 1 to 5, the lighting assembly 4 preferably comprises: a reflector body 7 with a substantially rigid and opaque structure, which is located inside the rear casing 2, preferably against the bottom of the same casing, and is provided with at least one concave reflecting surface 7a that preferably has a substantially semi-parabolic profile, and is oriented so as to reflect the incident light towards the facing transparent or semi-transparent sector of front half-shell 3; and an electrically-powered light-emitting device 8 preferably with a plate-like structure, which emits light on command and is located inside the rear casing 2, beside the reflector body 7 and advantageously also very close the bottom of rear casing 2, so as to direct the light produced towards the concave reflecting surface 7a of reflector body 7.

In further detail, the reflector body 7 is made of an opaque polymeric material advantageously by injection moulding, and the concave reflecting surface 7a is preferably covered by a thin film of opaque reflecting material, advantageously of metallic type, so as to reflect the incident light.

The reflector body 7, in addition, is structured so as to rest on the inner surface of rear casing 2 in at least one contact area 9, and is rigidly fixed/anchored to the rear casing 2 via at least one preferably substantially spotlike, laser welding joint 10 realized at the contact area 9.

Preferably, rear casing 2 and reflector body 7 are furthermore shaped/structured so as to realize, in the area of mutual contact 9, a shape coupling, or rather a male-female coupling.

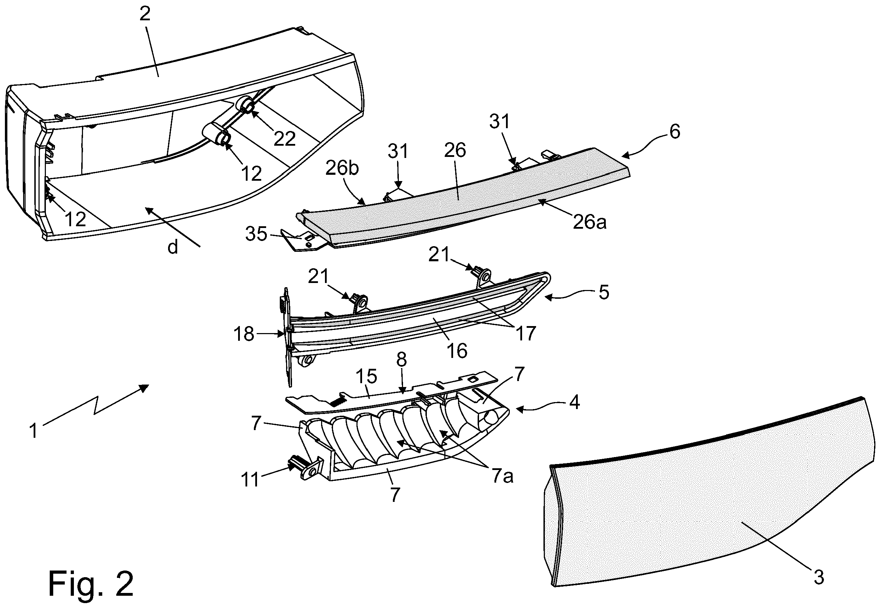

In further detail, with particular reference to Figures 2, 4 and 5, the reflector body 7 is preferably provided with one or more protruding fixing pins 11 advantageously substantially rectilinear and optionally also tapered towards the distal end, each of which extends parallel to an insertion direction d substantially perpendicular to the bottom of the casing 2, and is adapted to engage a corresponding receiving seat 12 preferably with cup-shaped or similar structure, which is realized directly on rear casing 2, or rather on the bottom of casing 2.

Preferably said receiving seat 12 furthermore has a shape substantially complementary to the distal end of the fixing pin 11.

In addition the distal end of the/each fixing pin 11 is preferably structured so as to rest stably on the bottom of the relative receiving seat 12.

The contact area 9, therefore, is preferably located on the bottom of the receiving seat 12.

In the illustrated example, in particular, the reflector body 7 is preferably made of opaque polycarbonate (PC) (a polymeric material suitable for mirror metallization), and is preferably provided with a number of concave reflecting surfaces 7a advantageously arranged aligned side by side to one another.

In the illustrated example, furthermore, the reflector body 7 is preferably provided with a pair of reciprocally parallel and substantially frustoconical in shape, fixing pins 11 that are arranged on opposite sides of the row of concave reflecting surfaces 7a, locally substantially perpendicular to the bottom of the rear casing 2.

Each fixing pin 11 is preferably adapted to engage a corresponding receiving seat 12 with cup-shaped structure, advantageously realized on the bottom of rear casing 2. Preferably each fixing pin 11 is furthermore shaped so to arrange its own distal end in abutment against the bottom of the receiving seat 12.

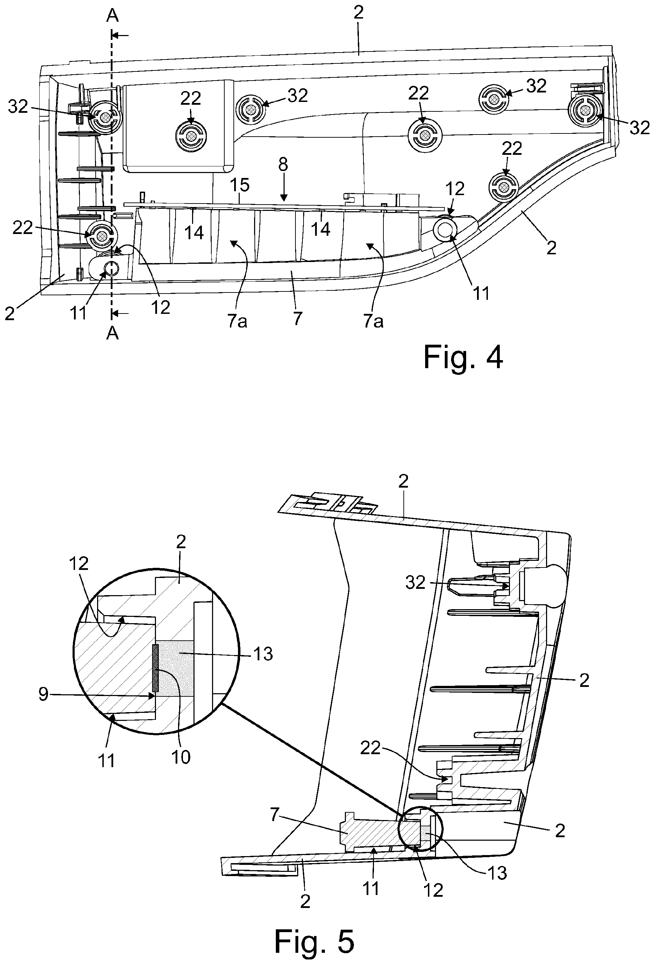

With reference to Figure 5, in addition, the rear casing 2 preferably has, on the bottom of the/each receiving seat 12, a small sector made of laser-transparent material 13, which takes up the entire thickness of rear casing 2 and allows the welding laser beam to reach the contact area 9 substantially without energy loss.

In further detail, the laser-transparent sector 13 is made of a polymeric material transparent to the wavelength of the laser beam used to create the laser welding joint 10.

In other words, the laser beam used to create the laser welding joint 10 is able to reach the contact area 9 passing through the laser-transparent sector 13 of the rear half-shell 2, and there directly heat the distal end of the fixing pin 11.

Preferably the/each laser-transparent sector 13 is furthermore made in one single piece with the rear casing 2 by means of an injection moulding process of known type, such as over-injection moulding (also known as overmoulding) or bi-injection moulding.

In the illustrated example, in particular, the laser-transparent sector 13 is preferably made of transparent acrylonitrile-butadiene-styrene (ABS) or transparent polycarbonate (PC).

Alternatively the/each laser-transparent sector 13 can be incorporated in the rear casing 2 by means of an injection moulding process with insert.

In the illustrated example, therefore, the reflector body 7 is one of the internal components made of opaque polymeric material, which are rigidly fixed to the rear casing 2 via a laser welding joint.

With reference to Figures 2, 3 and 4, the light-emitting device 8 preferably includes one or more LEDs 14 (acronym of Light Emitting Diode) that are located beside the reflector body 7, preferably adjacent to the bottom of rear casing 2, and are oriented so as to direct the light produced towards the concave reflecting surface(s) 7a of the same reflector body 7.

In further detail, the light-emitting device 8 preferably comprises: at least one printed circuit board 15, which is arranged grazing or abutting on the reflector body 7, beside the concave reflecting surface(s) 7a; and a series of LEDs 14, which are arranged on the printed circuit board 15 so as to directly face the concave reflecting surface(s) 7a of the reflector body 7.

Preferably, the printed circuit board 15 is furthermore rigidly fixed to the reflector body 7 in a known manner, and optionally also accomodates the electronics adapted to power and/or drive the LED(s) 14.

With reference to figures 1, 2, 3, 6 and 7, the lighting assembly 5 preferably comprises: a shielding mask 16 with substantially rigid and opaque structure, which is preferably shaped substantially in the form of an oblong basin, and is located inside the rear casing 2, preferably adjacent the back of the latter and preferably so as to be locally substantially parallel or in any case facing the opposite transparent or semi-transparent sector of front half-shell 3; an oblong light-guide bar 17 made of material transparent to visible light, which is preferably U-bent and is at least partially recessed in a corresponding receiving seat provided on the front or visible face of the shielding mask 16; and an electrically-powered light-emitting device 18, preferably with plate-like structure, which emits light on command and is located inside the rear casing 2, beside the shielding mask 16 and advantageously also adjacent the bottom of rear casing 2, so as to direct the light produced towards at least one and more expediently both ends of the light-guide bar 17.

In further detail, the light-emitting device 18 directs the light produced towards at least one and more conveniently both ends of the light-guide bar 17, so that the light can enter into the light-guide bar 17 at the end of the bar, and can then freely travel within the body of light-guide bar 17 by total internal reflection.

In addition, the light-guide bar 17 is preferably structured so as to let the light produced by the light-emitting device 18 progressively come out from its lateral side directly facing the front half-shell 3, in order to backlight the facing transparent or semi-transparent sector of front half-shell 3.

In further detail, the shielding mask 16 is made of an opaque polymeric material, advantageously via injection moulding.

In addition, the shielding mask 16 is structured so as to rest on the inner surface of the rear casing 2 at at least one contact area 19, and is rigidly fixed/anchored to the rear casing 2 by means of at least one, preferably substantially spotlike, laser welding joint 20 realized at contact area 19.

Preferably, the rear casing 2 and the shielding mask 16 are furthermore shaped/structured so as to realize, in the area of mutual contact 19, a male-female coupling.

In other words, the shielding mask 16 is preferably one of the internal components made of opaque polymeric material, which are rigidly fixed to the rear casing 2 via a laser welding joint.

In further detail, with reference to Figures 2, 3, 6 and 7, the shielding mask 16 is preferably provided with one or more protruding fixing pins 21 advantageously substantially rectilinear and optionally also tapered towards the distal end, each of which extends parallel to a given insertion direction d, and is adapted to engage a corresponding receiving seat 22 preferably with cup-shaped or similar structure, which is realized directly on the rear casing 2, or rather on the bottom of casing 2.

Preferably said receiving seat 22 furthermore has a shape substantially complementary to the distal end of the fixing pin 21.

In addition, the distal end of the/each fixing pin 21 is preferably structured so as to stably rest on the bottom of the relative receiving seat 22.

Therefore the area of mutual contact 19 is preferably located on the bottom of the receiving seat 22.

In the illustrated example, in particular, the shielding mask 16 is preferably made of white-coloured opaque polycarbonate (PC), while the light-guide bar is preferably made of transparent polycarbonate (PC) or transparent polymethylmethacrylate (PMMA).

In addition, the shielding mask 16 is preferably provided with four reciprocally parallel and substantially frustoconical in shape, fixing pins 11 that are arranged spaced side by side, along the perimeter edge of the shielding mask 16, so as to be locally substantially perpendicular to the bottom of the rear casing 2.

Each protruding pin 21, moreover, is preferably adapted to engage a corresponding receiving seat 22 with cup-shaped structure, advantageously realized on the bottom of the rear casing 2, so as to bring the distal end of the fixing 21 in abutment on the bottom of the receiving seat 22.

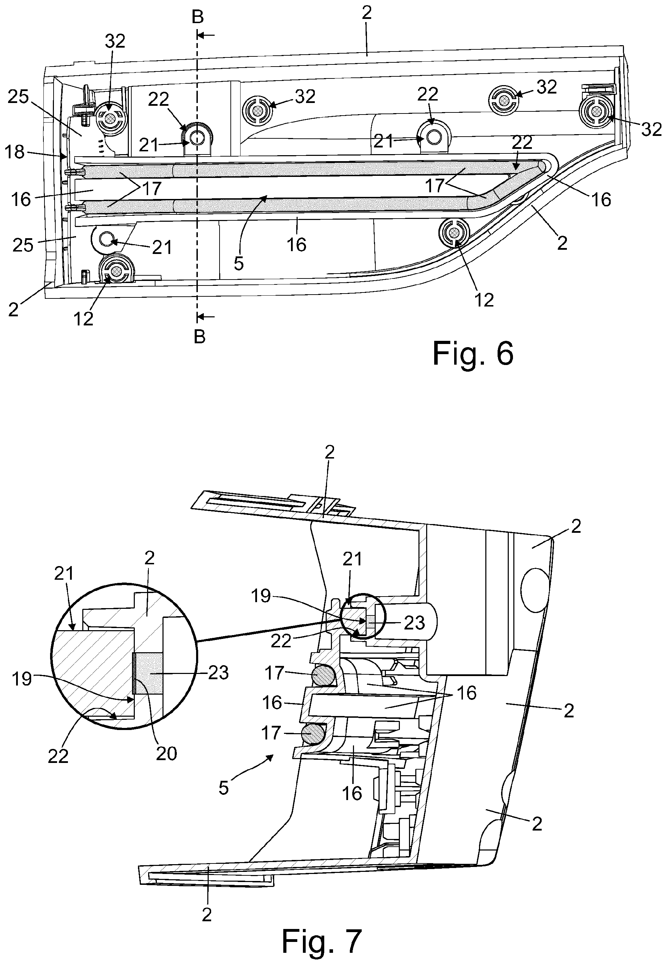

With reference to Figure 7, in addition, the rear casing 2 has, on the back of the/each receiving seat 22, a small sector made of laser-transparent material 23 that takes up the entire thickness of the rear casing 2 and allows the welding laser beam to reach the contact area 19 substantially without energy loss.

In further detail, the laser-transparent sector 23 is made of a polymeric material transparent to the wavelength of the laser beam used to realize the laser welding joint 20.

In other words, the laser beam used to realize the laser welding joint 20 reaches the contact area 19 passing through the laser-transparent sector 23 of rear half-shell 2, and directly heats the distal end of the fixing pin 21.

Similarly to the laser-transparent sector(s) 13, the/each laser-transparent sector 23 is preferably also made in one single piece with the rear casing 2 via an injection moulding process of known type, such as over-injection moulding (also known as overmoulding) or bi-injection moulding.

In the illustrated example, in particular, the laser-transparent sector 23 is preferably made of transparent acrylonitrile-butadiene-styrene (ABS).

Alternatively the/each laser-transparent sector 23 may be incorporated in the rear casing 2 by means of an injection moulding process with insert.

With reference to Figures 2, 3 and 4, on the other hand, the light-emitting device 18 preferably includes a pair of LEDs (not visible in the figures), which are arranged beside the shielding mask 16, preferably adjacent the two ends of the light-guide bar 17, and are oriented so as to direct the light produced towards the ends of the light-guide bar 17.

In further detail, the light-emitting device 18 preferably comprises: at least one printed circuit board 25, which is arranged grazing or abutting on the lateral side of the shielding mask 16, against the two ends of the light-guide bar 17; and a pair of LEDs 14 (not visible in the figures) that are located on the printed circuit board 25 so as to each directly face a respective end of light-guide bar 17.

Preferably, the printed circuit board 25 is moreover rigidly fixed to the shielding mask 16 in a known manner, and optionally also accommodates the electronics adapted to power and/or command the LED(s) provided on said printed circuit board 25.

With reference to Figures 1, 2, 3, 6 and 7, the lighting assembly 6 preferably comprises: a light-guide plate 26 substantially flat and made of material transparent to visible light, which is arranged inside the rear casing 2 with its front sidewall 26a directly facing, and more conveniently substantially grazing the corresponding transparent or semi-transparent sector of front half-shell 3, and with its rear sidewall 26b, opposite to front sidewall 26a, facing the bottom of the rear casing 2; and an electrically-powered light-emitting device 27, preferably oblong in shape, which emits light on command and is located inside the rear casing 2, adjacent the rear sidewall 26b of light-guide plate 26 and advantageously also adjacent the bottom of rear casing 2, so as to direct the light produced towards the rear sidewall 26b of light-guide plate 26.

In further detail, the light-emitting device 27 directs the light produced towards the rear sidewall 26b of light-guide plate 26, so that the light can enter the light-guide plate 26, freely travel within the body of light-guide plate 26 by total internal reflection up to reach the front sidewall 26a of said plate, and lastly freely come out from the front sidewall 26a of light-guide plate 26 in the direction of the front half-shell 3.

In addition, the lighting assembly 6 preferably also comprises a supporting bracket 28 with substantially rigid and opaque structure, which is firmly fixed to the rear casing 2 and supports the light-guide plate 26 and advantageously also the light-emitting device 27.

In further detail, the light-guide plate 26 is made of a polymeric material transparent to visible light advantageously via injection moulding, and is fixed in known manner to the support bracket 28.

The support bracket 28, on the other hand, is made of an opaque polymeric material advantageously via injection moulding.

In addition, the support bracket 28 is structured so as to rest on the inner surface of rear casing 2 in at least one contact area 29, and is rigidly fixed to the rear casing 2 via a preferably substantially spotlike, laser welding joint 30 realized at the contact area 29.

Preferably, the rear casing 2 and the support bracket 28 are furthermore shaped/structured so as to create, in the area of mutual contact 29, a male-female coupling.

In other words, the support bracket 28 is preferably one of the internal components made of opaque polymeric material, which are rigidly fixed to the rear casing 2 via a laser welding joint.

In further detail, with reference to Figures 2, 3, 8 and 9, the support bracket 28 is preferably provided with one or more protruding fixing pins 31, advantageously substantially rectilinear and optionally also tapered towards the distal end, each of which extends parallel to a given insertion direction, and is adapted to engage a corresponding receiving seat 32 preferably with cup-shaped or similar structure, which is realized directly on the rear casing 2, or rather on the bottom of casing 2.

Preferably said receiving seat 32 furthermore has a shape substantially complementary to the distal end of the fixing pin 31.

In addition, the distal end of the/each fixing pin 31 is preferably structured so as to stably rest on the bottom of the relative receiving seat 32. Preferably the contact area 29 is therefore located on the bottom of receiving seat 32.

In the illustrated example, in particular, the light-guide plate 26 is preferably made of transparent polycarbonate (PC) or transparent polymethylmethacrylate (PMMA).

The supporting bracket 28, on the other hand, is preferably made of opaque polycarbonate (PC), advantageously white-coloured, and is provided with four, reciprocally parallel and substantially frustoconical in shape, fixing pins 31 each of which extends perpendicular to the bottom of rear casing 2, and is adapted to engage a corresponding receiving seat 32 with cup-shaped structure, which is advantageously realized on the bottom of rear casing 2. Each fixing pin 31, furthermore, is shaped/structured so as to bring its distal end in abutment against the bottom of the receiving seat 32.

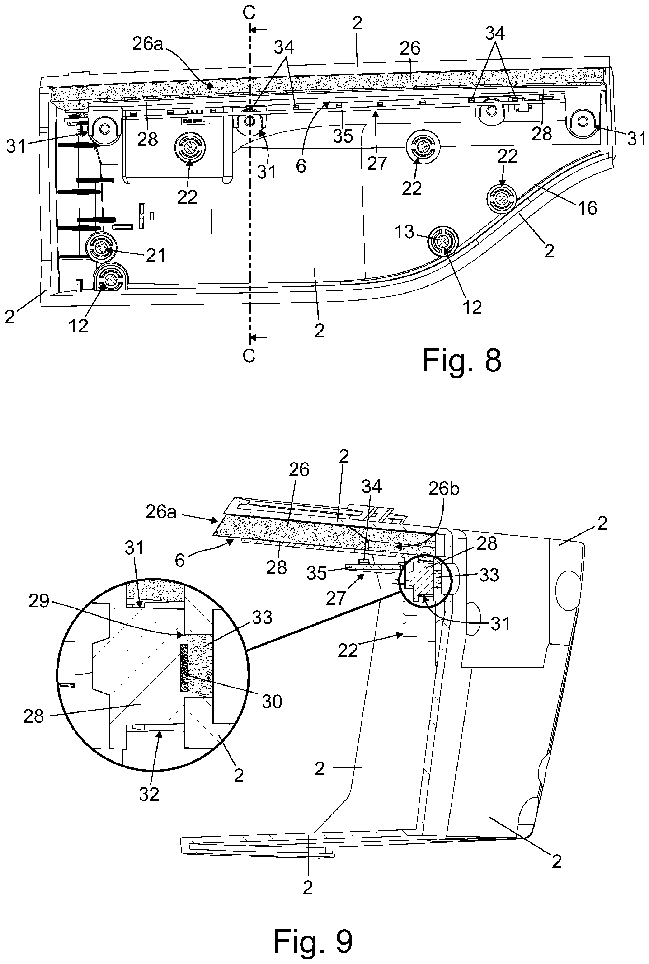

With reference to Figure 9, in addition, the rear casing 2 has, on the bottom of the/each receiving seat 32, a small sector made of laser-transparent material 33, which locally takes up the entire thickness of rear casing 2 and allows the welding laser beam to reach the contact area 29 substantially without energy loss.

In further detail, the laser-transparent sector 33 is made of a polymeric material transparent to the wavelength of the laser beam which is used to realize the laser welding joint 30.

In other words, the laser beam used to realize the laser welding joint 30 reaches the contact area 29 passing through the laser-transparent sector 33 of rear half-shell 2, and directly heats the distal end of the fixing pin 31.

Similarly to the laser-transparent sector(s) 13 and 23, also the/each laser-transparent sector 33 is preferably made in one single piece with the rear casing 2 via an injection moulding process of known type, such as over-injection moulding (also known as overmoulding) or bi-injection moulding.

In the illustrated example, in particular, the laser-transparent sector 33 is preferably made of transparent acrylonitrile-butadiene-styrene (ABS).

Alternatively the/each laser-transparent sector 33 may be incorporated in the rear casing 2 via an injection moulding process with insert.

With reference to Figures 1, 2, 3, 8 and 9, the light-emitting device 27 preferably comprises a series of LEDs 34 that are arranged adjacent the rear sidewall 26b of light-guide plate 26, preferably suitably spaced throughout the length of the rear sidewall 26b, and are oriented so as to direct the light produced towards the rear sidewall 26b.

In further detail, the light-emitting device 27 preferably comprises: at least one, substantially ribbon-like, namely having a narrow and elongated shape, printed circuit board 35 that is arranged beneath the light-guide plate 26, substantially grazing the rear sidewall 26b of the light-guide plate 26; and a row of LEDs 34 that are arranged on the printed circuit board 35 so as to be directly facing the rear sidewall 26b of light-guide plate 26.

Preferably, the printed circuit board 35 is moreover rigidly fixed to the supporting bracket 28 in known manner, and optionally also accommodates the electronics that are adapted to power and/or command the LED(s) 34 provided on said printed circuit board 35.

Clearly in an alternative embodiment, the laser-transparent sectors 13, 23 and/or 33, instead of being located on the rear casing 2, may be located on the fixing pin 11, 21 and/or 31.

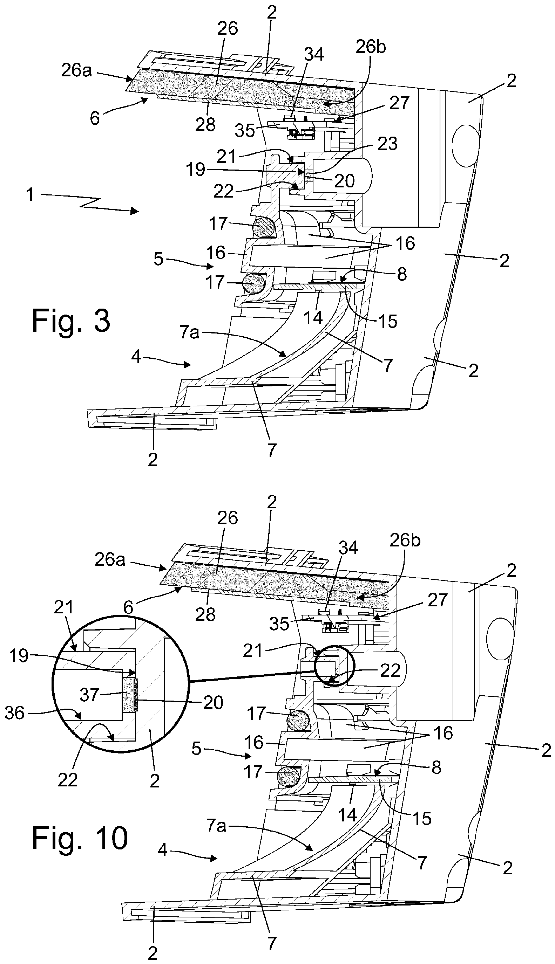

With reference to Figure 10, for example, the/each fixing pin 21 of shielding mask 16 preferably has a longitudinal blind hole 36, which ends close to the distal end of said fixing pin 21.

In this embodiment, the fixing pin 21 is again made of opaque polymeric material but is preferably provided with a small sector made of laser-transparent material 37, which is arranged on the bottom of the blind hole 36, or rather on the distal end of fixing pin 21, and locally takes up the entire thickness of the fixing pin 21, so as to allow the laser beam to reach the contact area 19 substantially without energy loss.

In further detail, similarly to the laser-transparent sectors 13, 23 and/or 33, the laser-transparent sector 37 is made of a polymeric material transparent to the wavelength of the laser beam used to realize the laser welding joint 20.

In other words, the laser beam used to create the laser welding joint 20 reaches the contact area 19 travelling through the blind hole 36 present in the centre of the fixing pin 21. Once it has reached the bottom of the blind hole 36, the laser beam crosses the laser-transparent sector 37 of the fixing pin 21 and directly heats the rear casing 2 so as to create the laser welding joint 20.

Preferably the laser-transparent sector 37 is furthermore made in one single piece with the fixing pin 21, or rather the shielding mask 16, via an injection moulding process of known type, such as over-injection moulding (also known as overmoulding) or bi-injection moulding.

In the illustrated example, in particular, the laser-transparent sector 37 is preferably made of transparent polycarbonate (PC).

Alternatively the/each laser-transparent sector 37 may be incorporated in the distal end of the fixing pin 21 via an injection moulding process with insert.

Clearly the internal components of the automotive lighting device 1 include, or may include, also one or more retroreflectors, coloured lenticular filters, diffusion filters, corrective lenses, fixing bezels and/or other structural and/or support components that is/are at least partially made of opaque polymeric material, is/are arranged resting on the inner surface of rear casing 2 in at least one contact area, and is/are rigidly and non-removably fixed to the rear casing 2 via a laser welding joint realized in said contact area.

General operation of the automotive lighting device 1 is easily inferable from the above description and requires no further explanation.

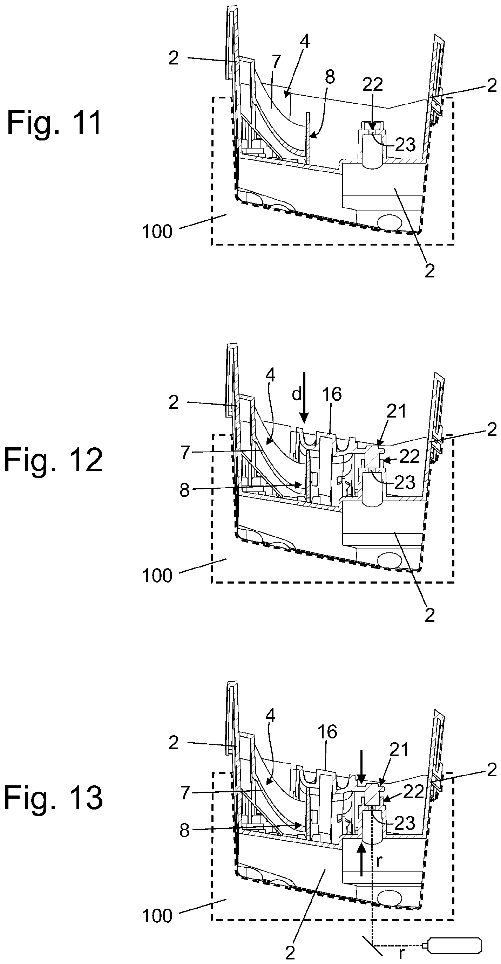

With reference to Figures 11, 12 and 13, production of the automotive lighting device 1 firstly comprises the step of producing, preferably via injection moulding, a rear casing 2 made of polymeric material opaque to visible light; and the step of producing, preferably via injection moulding, at least one lighting internal component made of polymeric material opaque to visible light (namely the reflector body 7 and/or the shielding mask 16 and/or the light-guide plate 26 and/or other components that are made of opaque polymeric material and preferably contribute to forming any one of the lighting assemblies of the lighting device).

On choice, the casing 2 or the lighting internal component has at least one portion made of laser-transparent polymeric material which locally takes up the entire thickness of the piece.

After having realized the rear casing 2 and the lighting internal component(s), production of the automotive lighting device 1 comprises the step of placing said lighting internal component(s) made of opaque polymeric material (namely the reflector body 7 and/or the shielding mask 16 and/or the light-guide plate 26 and/or other components, which are made of opaque polymeric material and preferably contribute to forming any one of the lighting assemblies of the lighting device) inside the rear casing 2, resting on the inner surface of the rear casing 2 at one or more contact areas or zones; and then the step of fixing via laser welding the internal component(s) made of opaque polymeric material directly on the rear casing 2 by realizing a laser welding joint at said contact area(s).

The or each contact area or zone between the casing 2 and the lighting internal component made of opaque polymeric material is arranged at a said portion made of laser-transparent polymeric material that locally takes up the entire thickness of the piece.

In further detail, the step of fixing via laser welding entails temporarily directing a laser beam r on the contact/ support area between the rear casing 2 and said lighting internal component made of opaque polymeric material, passing through the portion/sector made of laser-transparent polymeric material, which is adjacent/beside the contact area and it is present, on choice, on the casing 2 or on the internal component, so as to realize a laser welding joint at said contact area or zone.

In other words, the laser beam r passes through the portion/ sector made of laser-transparent polymeric material substantially without energy loss, and reaches the opaque polymeric material at the contact area, which in turn absorbs the energy of laser beam r and heats locally up to melting temperature. More or less simultaneously the heat produced by the laser beam r is transmitted by conduction also to the polymeric material that forms the adjacent laser-transparent portion, causing the localized melting also of this second polymeric material.

Preferably, the laser beam r has a wavelength advantageously higher than 400 nm (nanometres) and more conveniently higher than 900 nm (nanometres).

The subsequent re-hardening of the opaque polymeric material and the laser-transparent polymeric material joins the two pieces in a rigid non-removable manner.

The use of a laser-transparent portion/sector at the contact area between two pieces made of opaque polymeric material allows the operating limits of laser welding to be overcome. In fact, the laser beam cannot freely pass through a body made of opaque polymeric material.

In addition, the step of fixing via laser welding preferably also comprises pressing/compressing, at the contact area, the internal component made of opaque polymeric material against the rear casing 2 and/or vice versa.

Preferably, at the end of the step of fixing via laser welding, production of automotive lighting device 1 moreover comprises the step of placing the front half-shell 3 on the mouth of the rear casing 2, and then the step of welding the front half-shell 3 to the rear casing 2 along the perimeter edge of said mouth.

With reference to Figures 11, 12 and 13, before placing the internal component(s) made of opaque polymeric material inside the rear casing 2, production of automotive lighting device 1 preferably also comprises the step of placing the rear casing 2 on a workpiece-carrying fixture 100, which is structured so as to accommodate and firmly retain the rear casing 2 in a given assembly position in which the mouth of the rear casing 2 advantageously faces upwards.

In further detail, with reference to Figures 12 and 13, assuming the rear casing 2 has already been placed into the workpiece-carrying fixture 100 and that all the components that contribute to forming the lighting assembly 4 have already been placed inside the rear casing 2, and optionally also already firmly fixed to the rear casing 2, the production of automotive lighting device 1 preferably entails to place the shielding mask 16 into the rear casing 2, inserting the various fixing pins 21 each inside a respective receiving seat 22 provided on the bottom of the rear casing 2; and then to direct a laser beam r onto the contact area 19, passing through the laser-transparent sector 23, so as to realize the laser welding joint 20 at said contact area 19.

In addition, during heating up of the contact area 19 via the laser beam r, production of automotive lighting device 1 preferably also entails to press the/each fixing pin 21 against the bottom of the relative receiving seat 22 and/or vice versa.

Production of the automotive lighting device 1 continues with insertion and fixing of the other components of the lighting assembly 5 and the lighting assembly 6, and ends with the welding of front half-shell 3 on the mouth of rear casing 2.

The advantages resulting from the use of the production method described above are considerable.

The fixing of the internal components of automotive lighting device 1 on the rear casing 2 via laser welding joints allows elimination of all, or in any case the majority, of the metal self-threading screws normally used to fix the internal components of the automotive lighting device to its rear casing, with considerable reduction in the resulting weight and production costs.

Immediate fixing of the internal components of the automotive lighting device 1 via laser welding joints, furthermore, allows elimination or at least minimization of the number of snap locking tabs inside the rear casing 2, with consequent considerable simplification of the structure of the mould used to produce the rear casing 2.

Last but not least, the production method described above allows the assembly line of the automotive lighting device to be simplified and speeded up, with all advantages that this entails.

In fact, the automatic screwdriver is one of the most delicate and problematic tools currently used in assembly lines for automotive lighting devices.

It is finally clear that modifications and variations may be made to the automotive lighting device 1 and to the production method thereof without departing from the scope of the present invention.

For example, in a different embodiment, instead of having a small laser-transparent sector 13, 23 and/or 33 on the bottom of the receiving seats 12, 22 and/or 32, the rear casing 2 may be provided with one or more macro-sectors made of laser-transparent material, each of which incorporates a plurality of receiving seats 12, 22 and/or 32.

Clearly the/each laser-transparent macro-sector of rear casing 2 is again made of a polymeric material transparent to the wavelength of the laser beam that is used to realize the laser welding joint inside the receiving seat 12, 22 and/or 32. Preferably, said macro-sector(s) made of laser-transparent material furthermore form the entire structure of the various receiving seats 12, 22 and/or 32.

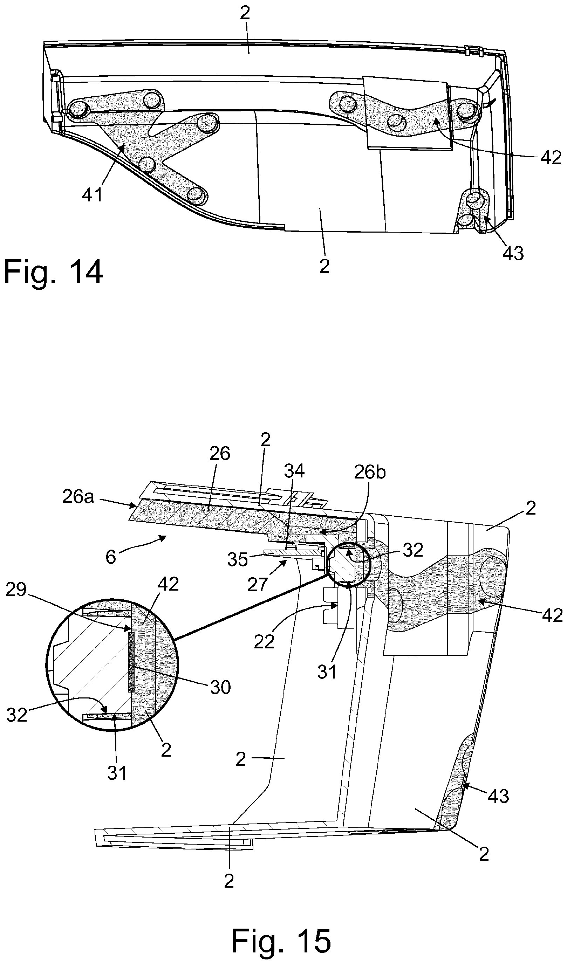

In further detail, with particular reference to Figures 14 and 15, in the illustrated example the rear casing 2 is advantageously provided with three laser-transparent macro-sectors 41, 42 and 43.

The laser-transparent macro-sector 41 preferably incorporates one of the two receiving seats 12, a part of the receiving seats 22, and a part of the receiving seats 32, preferably also forming the entire structure of each of said receiving seats 12, 22, 32.

The laser-transparent macro-sector 42, on the other hand, preferably incorporates a part of the receiving seats 22 and a part of the receiving seats 32, preferably also forming the entire structure of each of said receiving seats 22, 32.

Lastly, the laser-transparent macro-sectors 43 preferably incorporates one of the two receiving seats 12 and one of the receiving seats 22, preferably also forming the entire structure of each of said receiving seats 12, 22.

With reference to Figure 15, in addition, the lighting assembly 6 can lack the supporting bracket 28 and the fixing pin(s) 31 are preferably made in one single piece with the light-guide plate 26, clearly again in opaque polymeric material.

In further detail, the four fixing pins 31 are arranged spaced from and beside one another, along the rear sidewall 26b of light-guide plate 26, and are made in one single piece with the light-guide plate 26 by means of an over-injection or bi-injection moulding process.

## Claims

1. An automotive lighting device (1) comprising: a rear casing (2) that is made of opaque polymeric material and is adapted to be fixed to the body of the vehicle; a front half-shell (3) that is arranged to close the mouth of said rear casing (2) and is provided with at least one transparent or semi-transparent sector; and at least one lighting assembly (4, 5, 6), which is located inside the rear casing (2) and is adapted to backlight the front half-shell (3);
the automotive lighting device (1) being provided with at least one internal component (7, 16, 28) that is made of opaque polymeric material and rests on the inner surface of the rear casing (2) in at least one contact area (9, 19, 29);
said automotive lighting device (1) being **characterized in that** said rear casing (2) and said internal component (7, 16, 28) are rigidly fixed to each other by a laser welding joint (10, 20, 30) provided at said contact area (9, 19, 29).

2. The automotive lighting device according to Claim 1, wherein one between said rear casing (2) and said internal component (7, 16, 28) has, at said contact area (9, 19, 29), a portion or sector made of laser-transparent polymeric material (13, 23, 33, 41, 42, 43), which locally takes up the entire thickness of the piece; the laser welding joint (10, 20, 30) being located straddling said portion made of laser-transparent polymeric material (13, 23, 33, 41, 42, 43) and the adjacent portion made of opaque polymeric material.

3. The automotive lighting device according to Claim 1 or 2, wherein said internal component (7, 16, 28) is provided with one or more protruding fixing pins (11, 21, 31), which extend in a predefined insertion direction (d) and have their distal end abutting on the inner surface of said rear casing (2) or vice versa; the laser welding joint (10, 20, 30) being located at the distal end of said fixing pin (11, 21, 31).

4. The automotive lighting device according to any one of the preceding claims, wherein said rear casing (2) and said internal component (7, 16, 28) are shaped/structured so as to create, in the contact area (9, 19, 29), a male-female coupling.

5. The automotive lighting device according to claims 3 and 4, wherein the fixing pin (11, 21, 31) engages a receiving seat (12, 22, 32) realized on the other piece.

6. The automotive lighting device according to Claim 5, wherein the distal end of the fixing pin (11, 21, 31) rests on the bottom of said receiving seat (12, 22, 32), and the portion made of laser-transparent polymeric material (13, 23, 33, 41, 42, 43) is located on the bottom of said receiving seat (12, 22, 32).

7. The automotive lighting device according to Claim 6, wherein the receiving seat (12, 22, 32) is substantially cup-shaped.

8. The automotive lighting device according to Claim 6 or 7, wherein the entire receiving seat (12, 22, 32) is made of laser-transparent polymeric material.

9. The automotive lighting device according to any one of the preceding claims, wherein said internal component (7, 16, 28) contributes to forming said lighting assembly (4, 5, 6).

10. The automotive lighting device according to any one of the preceding claims, wherein the automotive lighting device (1) is a headlight or taillight for cars and the like.

11. A method for the production of an automotive lighting device (1) that comprises: a rear casing (2), which is made of opaque polymeric material and is adapted to be fixed to the body of the vehicle; a front half-shell (3), which is arranged to close the mouth of said rear casing (2) and is provided with at least one transparent or semi-transparent sector; and at least one lighting assembly (4, 5, 6), which is located inside the rear casing (2) and is adapted to backlight a corresponding transparent or semi-transparent sector of the front half-shell (3);
the production method being **characterized by** comprising the step of placing one or more internal components made of opaque polymeric material (7, 16, 28) inside the rear casing (2), resting on the inner surface of the rear casing (2) in at least a respective contact area (12, 22, 32); and then the step of fixing via laser welding said internal component(s) (7, 16, 28) directly to the rear casing (2) by realizing a laser welding joint (10, 20, 30) at said contact area(s) (12, 22, 32).

12. The method for the production of an automotive lighting device according to Claim 11, wherein said step of fixing via laser welding comprises directing a laser beam (r) onto the contact area (9, 19, 29) between said rear casing (2) and said internal component (7, 16, 28), passing through a portion/ sector made of laser-transparent polymeric material (13, 23, 33, 41, 42, 43), which is provided, on choice, on said rear casing (2) or on said internal component (7, 16, 28) and is adjacent/beside said contact area (9, 19, 29).

13. The method for the production of an automotive lighting device according to Claim 12, wherein said step of fixing via laser welding additionally comprises pressing/compressing, at the contact area (9, 19, 29), said internal component (7, 16, 28) against the rear casing (2) and/or vice versa.

14. The method for the production of an automotive lighting device according to any one of the preceding claims, wherein said internal component (7, 16, 28) contributes to forming at least one said lighting assembly (4, 5, 6).

15. The method for the production of an automotive lighting device according to any one of the preceding claims, **characterized by** comprising, at the end of the step of fixing via laser welding, also the step of arranging the front half-shell (3) on the mouth of the rear casing (2), and then welding said front half-shell (3) to the rear casing (2) along the perimeter edge of said mouth.
